# EUROPEAN PATENT SPECIFICATION

(11) **EP 2 028 601 B1**
(45) Date of publication and mention of the grant of the patent: **01.10.2014**
(21) Application number: 07015417.4
(22) Date of filing: 07.08.2007
(51) Int. Cl.: G06F 21/00

(54) **Secure mobile environment policy realization based on timed one-time upkeep codes**
Realisierung von Richtlinien für eine sichere Mobilgeräteumgebung auf der Basis geplanter Einmalaktualisierungscodes
Réalisation de politique environnementale mobile sécurisée basée sur des codes de maintenance temporisés une seule fois

(43) Date of publication of application: 25.02.2009
(73) Proprietor: ALCATEL LUCENT, 92100 Boulogne-Billancourt (FR)
(72) Inventor: Glinka, Michael Frank, 90411 Nürnberg (DE)
(74) Representative: Wetzel, Emmanuelle

(56) References cited:
- EP-A- 1 638 303
- WO-A-02/41125
- GB-A- 2 400 196
- US-A- 5 748 084
- US-A- 5 913 175
- US-A- 6 114 960
- US-A1- 2006 161 445
- US-A1- 2006 244 590

## Description

### Background of the invention

The invention relates to a method for operating an electronic device, in particular a mobile electronic device,
wherein the electronic device has a normal operation mode allowing full functions of the electronic device, and a restricted operation mode allowing only a part or none of the full functions of the electronic device,
wherein in the normal operation mode, the electronic device expects to receive a next one-time upkeep code within a specified upkeep time interval UTI after having received a previous one-time upkeep code,
wherein in case an expected next one-time upkeep code is missing or incorrect, the electronic device switches into the restricted operation mode,
wherein for the electronic device, an intended technological environment of use is defined,
wherein the intended technological environment provides the one-time upkeep codes for keeping the electronic device in the normal operation mode, and wherein the electronic device can receive the one-time upkeep codes of the intended technological environment as long as it is operated within the intended technological environment, but cannot receive the one-time upkeep codes of the intended technological environment when the electronic device is operated outside of the intended technological environment.

Such a method is known from GB 2 400 196 A.

Electronic devices are widely used in everyday life and business. Electronic devices include, among other things, telecommunication devices, such as mobile phones, smart phones or laptops with internet access, and data storage devices, such as personal digital assistants (PDAs), or computers in general.

The loss of such electronic devices is most often very painful, both due to the value of the device itself, and due to the value of information stored on the lost electronic device. The loss of the information for the user of the electronic device may be avoided by taking backup copies from time to time. However, if the information is confidential, the access of a third party to the confidential information can be a huge problem. A loss of an electronic device may occur accidentally (for example, when forgetting an electronic device at a customer's facility or in a taxi), or the loss of the electronic device can result from a criminal act (above all theft, robbery, or industrial spying).

In order to protect electronic devices, it is known to bar the access to the full functions of the electronic device by a code. For example, state of the art computers require the manual input of a password after booting the computer.

Only after having entered the password, there is access to the data stored on the computer. As another example, when a computer has not been used for a longer period of time, such as half an hour, proceeding with the use requires the manual input of the password again.

It is also known that a mobile phone requires the input of a password for normal function, for example after having been switched on or after not having been used for some time. As long as the password is not entered, only emergency numbers (such as 911 in the USA or 112 in Germany) may be chosen.

In both cases, the operation condition of the electronic device when a password is requested can be considered a restricted operation mode, and after having entered the password, the electronic device is in the normal operation mode.

However, password protection is not helpful when a thief obtains an electronic device in an normal (unlocked) operation mode. Further, the password protection may be insufficient when a thief has enough time and can get physical access to the interior of the device. Moreover, an electronic device such as a laptop or PDA can be reused after a complete (factory) reset. For mobile phones, it is known to block a SIM card by contacting the telecom operator; but the mobile phone can be reused with a new SIM card. For core network equipment, there is often no protection at all.

### Object of the invention

It is the object of the present invention to improve the security of electronic devices.

### Short description of the invention

This object is achieved, in accordance with the invention, by a method of operation as introduced in the beginning, characterized in that the intended technological environment includes a specific SIM (=subscriber identity module) card within a SIM card slot of the electronic device, the specific SIM card within the SIM card slot providing the upkeep codes, wherein the specific SIM card is removable from the electronic device.

The idea of the invention is that the electronic device to be protected requires a regular receipt of codes (called upkeep codes) in order to be able to stay in the normal operation mode. As long as next upkeep codes arrive at the electronic device in time, the electronic device usually stays in the normal operation mode (note that the restricted operation mode may still be switched to for other reasons, for example a manual user order or a longer idle time). In case the regular input of one-time upkeep codes ceases, the electronic device goes into a restricted operation mode. In the restricted operation mode, the electronic device cannot be used in the usual way, and therefore is less valuable or even useless for the possessor.

Taking the protected electronic device away from an intended technological environment of use (only there the upkeep codes are provided) will automatically cause that the electronic device will no more receive upkeep codes, e.g. in case of a theft.

In accordance with the invention, the intended technological environment provides the one-time upkeep codes for keeping the electronic device in the normal operation mode, and the electronic device can receive the one-time upkeep codes of the intended technological environment as long as it is operated within the intended technological environment, but cannot receive the one-time upkeep codes of the intended technological environment when the electronic device is operated outside of the intended technological environment. The protection of the electronic device is automated, which increases the protection level of the electronic device enormously. The intended technological environment is determined by the availability of the one-time upkeep codes, what is in general determined by technical equipment in use. If the electronic device is taken out of or disconnected from the intended technological environment of use, the electronic device will no more receive upkeep codes, what causes the electronic device to switch in the restricted mode automatically. This is a particularly good protection against theft of the electronic device. Note that the intended technological environment of use typically provides one-time upkeep codes regularly in specified sender time intervals STI, with STI < UTI, and typically STI < 0.7 UTI. It is also possible to have STI < 0.5 UTI so that the electronic device may miss a sent one-time upkeep code once in a while without immediately switching into the restricted mode. Note that the intended technological environment of use resp. its technical equipment typically provides the next one-time upkeep codes automatically.

The intended technological environment includes a specific SIM (=subscriber identity module) card removable from the electronic device, wherein the specific SIM card provides the upkeep codes. In case the SIM card is removed from the electronic device (such as a mobile phone), the electronic device will switch into the restricted mode as soon as the next one-time upkeep sequence is overdue. In order to exclude that a thief removes a SIM card, clones it and reinserts it (or the clone), it may be useful to choose the UTI in the milliseconds range, such as between 5 ms to 100 ms. The upkeep codes may be stored (in particular buffered) on the SIM card, and/or the SIM card is essential for receiving next one-time upkeep codes from the remaining intended technological environment of use (including a telecommunication network), for example the SIM card converts external signals into upkeep codes. The SIM card may also have a function installed or program loaded which generates the upkeep codes, i.e. the SIM card acts as a server. Note that the inventive protection covers the electronic device (such as the mobile phone) using the SIM card, and not the SIM card itself. Replacing the specific SIM card with another one (not providing the correct codes) will not make the electronic device available again. To make the electronic device available again will typically require entering the correct reauthorisation code at the electronic device.

To improve the security, each upkeep code is valid only a single time (one-time upkeep code), i.e. every next one-time upkeep code differs from its previous one-time upkeep code. Preferably, all scheduled one-time upkeep codes are different from each other. Therefore, knowing past upkeep codes (e.g. from wiretapping) is useless and does not allow an unauthorized user to keep the electronic device in the normal operation mode. According to the invention, it is possible to have a plurality of valid upkeep codes for the electronic device, but it is preferred that at a given instant, only one next upkeep code is valid (If more than one upkeep code is valid at a given instant, the type of upkeep code sent resp. received at the electronic device may be used to transfer information from the sender to the electronic device, such as a change in protection level). The valid upkeep code(s) may be determined by a correlation with date and time, or it may result as the next entry(entries) of a list of one-time upkeep codes (sequenced list). A typical one-time upkeep code is a binary or alphanumerical sequence of characters, with typically a size of 64 bit or more, preferably 256 bit or more.

If desired, the electronic device may also confirm the receipt of any upkeep code received to its sender. This may help tracing which upkeep codes have already been used, in particular in case they are not correlated to date and time.

With respect to the normal operation mode, there are numerous possibilities for adapting the protection level of the electronic device, in particular with respect to
- what is the length of the upkeep time interval UTI,
- and how are the upkeep codes transferred to the electronic device, including encryption.
Note that typically, the UTIs are constant and range from 5 seconds to 1 day, and preferably from 1 minute to 1 hour; however in some cases UTIs in the milliseconds range may be useful. Note that shorter UTIs increase the protection level.

With respect to the restricted operation mode, there are numerous possibilities for adapting the protection level of the electronic device, in particular with respect to
- what immediate safety measures are taken by the electronic device upon entering the restricted operation mode,
- what functions the restricted operation mode allows as compared to the normal operation mode,
- and what steps must be taken to resume normal operation mode.
Note that for maximum security, one can completely deny reassuming the normal operation mode once the restricted operation mode has been entered. It is also possible, also for maximum security, to delete all data stored on the electronic device upon entering the restricted mode. In order to make the electronic device itself useless, the device can destruct itself upon entering the restricted mode.

The protection level of the electronic device is preferably adaptable according to the user's needs, preferably by a software modification.

In the following, the state that the next one-time upkeep code is missing (overdue) or incorrect is referred to as absence of the next one-time upkeep code.

### Preferred variants of the invention

In a preferred variant of the inventive method, in the restricted operation mode, the access to part of or all of the data stored on the electronic device is denied. This variant offers a basic protection against unauthorized use or distribution of data.

An advantageous variant is **characterized in that** after the electronic device has switched into the restricted operation mode due to the detection the absence of a next one-time upkeep code, the normal operation mode is resumed as soon as a valid one-time upkeep code is received again at the electronic device. In this variant, the restoration of the normal operation mode is particularly simple, and a maximum availability of the electronic device is provided.

A particularly preferred variant of the inventive method is **characterized in that** after the electronic device has switched into the restricted operation mode due to the detection the absence of a next one-time upkeep code, the normal operation mode is only resumed when a correct reauthorisation code is entered at the electronic device. Preferably, entering of the reauthorization code is manual. The entering of the reauthorisation code can be realized, for example, as typing numbers and/or letters into a keyboard, or putting a key into a key hole, or inserting a coded card into a slot. It is also possible to enter the reauthorisation code at the electronic device via an interface such as bluetooth, WLAN, GSM, UMTS or the like. The reauthorisation code is typically of a size of 64 bit or more, preferably 256 bit or more.

In a highly preferred further development of this variant, if the correct reauthorisation code sequence is not entered within specified circumstances after the absence of a next one-time upkeep code has been detected at the electronic device, additional safety measures are initiated at the electronic device. In this variant, a high security level can be achieved, while at the same time avoiding irreversible immediate security measures upon an accidental switching into the restricted mode. Irreversible security measures may be left to the additional safety measures. By duly entering the reauthorization code, the authorized user may prevent the (possibly irreversible) additional security measures.

For said further development, according to the invention, the specified circumstances may include
- that the correct reauthorisation code must be entered within a specified first time T1 after the absence of a next one-time upkeep code has been detected at the electronic device,
- and/or that the correct reauthorisation code must be entered within a specified second time T2 after a request for entering the reauthorisation code has been issued by the electronic device,
- and/or that the correct reauthorisation code must be entered within a specified third time T3 after a factory reset of the electronic device,
- and/or that the correct reauthorisation code must be entered within a limited number of trials, such as three trials.

Also for said further development, according to the invention, the additional safety measures may include
- the deactivation of the electronic device,
- and/or the access to part of or all of the data stored on the electronic device is denied;
- and/or the deletion of some or all of the data stored in the electronic device,
- and/or the destruction of the electronic device. Note that irreversible safety measures are preferably undertaken as the additional safety measures, i.e. when the user cannot duly provide the reauthorisation code.

In another variant of the inventive method, the correctness of a one-time upkeep code received at the electronic device is verified by
- comparing the received upkeep code with an entry of a list of one-time upkeep codes stored at the electronic device,
- or comparing the received upkeep code with an upkeep code generated by an upkeep code generating function installed at the electronic device,
- or calculating a checking code from the received upkeep code by a checking function installed at the electronic device, and comparing the checking code with an entry of a list of checking codes stored at the electronic device. The first alternative is very simple. The second alternative requires less data storage space, and is typically more difficult to crack. The third alternative offers a very good protection level, since there are no upkeep codes at all stored on the electronic device. Preferably, the physical access to a chip of the electronic device containing a stored list or an installed function is secured by a seal, the breakage of which is easy to detect for a user, and/or the breakage of which will cause the electronic device to destroy itself or delete stored data.

Also within the scope of protection of the present invention is an apparatus comprising an electronic device, in particular mobile electronic device,
wherein the electronic device has a normal operation mode allowing the full functions of the electronic device, and a restricted operation mode allowing only a part or none of the full functions of the electronic device,
wherein the electronic device comprises an operation mode controller OMC for setting the operation mode of the electronic device,
wherein the electronic device further comprises a receiver for receiving one-time upkeep codes,
wherein the operation mode controller OMC is designed to check, during normal operation mode, whether a next one-time upkeep code is received within a specified upkeep time interval UTI after having received a previous one-time upkeep code,
and wherein the operation mode controller OMC is designed to set the electronic device into the restricted operation mode in case an expected one-time upkeep code is missing or incorrect,
characterized in that
the apparatus further comprises a specific SIM card which is removable from the electronic device, and which provides the upkeep codes. The electronic device can be protected efficiently by the inventive method. Note that the electronic device typically also comprises an input and/or a data interface, in particular a manual input such as a keyboard, for entering a reauthorisation code. Further the electronic device typically also comprises an indicator for indicating a request for entering the reauthorisation code. The indicator can be a display showing a text message, or a sight signal, or a voice message issued via a loudspeaker, or buzzer, for example.

In a preferred embodiment of the inventive electronic device, the operation mode controller OMC is designed to resume the normal operation mode as soon as a valid one-time upkeep code is received at the receiver. This will make the electronic device highly available.

Another alternative embodiment is **characterized in that** the electronic device comprises an input, in particular a keyboard, and/or a data interface, in particular a key card slot, and that the operation mode controller OMC is designed to resume the normal operation mode only when a correct reauthorisation code is entered at the input or at the data interface. This improves the security of the electronic device.

In an advantageous further development of this embodiment, the electronic device comprises an indicator, in particular a display, for signalling a request for reauthorization.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a schematic flow diagram of a first variant of the inventive method, with automatic reassuming of the normal operation mode;
- Fig. 2a: shows a schematic flow diagram of a second variant of the inventive method, with the reassuming of the normal operation mode by input of a reauthorization code;
- Fig. 2b: shows a schematic flow diagram of a second variant of the inventive method, with an additional modified operation mode;
- Fig. 3: shows schematically an electronic device and an intended technological environment of use comprising wireless data connections, for general explanation;
- Fig. 4: shows schematically an electronic device and an intended technological environment of use comprising a physical data connection, for general explanation;
- Fig. 5: shows schematically an electronic device in accordance with the invention.

The present invention relates to a security system for electronic devices based on rules for intended behavior of users of the electronic devices, and security levels (or protection levels) for the electronic devices. Electronic devices protected include, among other things, mobile electronic devices and/or telecommunication devices and/or data storage devices and/or stationary core network equipment.

The rules for intended behavior require the user to limit his use of the electronic device such that the electronic device can be regularly provided with one-time upkeep codes (or passwords). Typically, the one-time upkeep sequences can only be received in a very limited technological environment where devices for automatically generating the upkeep codes are accessible, i.e. installed and connected. The limitation is typically a limitation of the area of use. Generally speaking, the intended technological environment of use is some technical equipment (plus its operation range). The technical equipment comprises at least one device for generating one-time upkeep codes. When the electronic device is operated within (or together with) the intended technological environment, i.e. the electronic device is connected to and/or cooperates with said technical equipment, the electronic device can receive the generated one-time upkeep codes. In contrast, when the electronic device is operated outside (or separate from) the intended technological environment, typically meaning that the electronic device is operated solitarily or that it is connected to and/or cooperates with some other technical equipment not belonging to the intended technological environment of use only, it cannot receive the upkeep codes. Note that the intended technological environment of use can be installed only for the purpose of protecting the electronic device, but usually, providing the upkeep codes is an auxiliary function of the intended technological environment in which the electronic device is regularly operated. In principle, the state of being disconnected from the intended technological environment of use is considered as an indicator for a high danger for the security of the electronic device and the data stored on it.

As long as the electronic device gets the next expected upkeep code ("has NUC coverage"), it operates normally (normal operation mode). In other words, the electronic device must receive unlock information (a next upkeep code) regularly (within a specified time UTI) to keep it alive. However, if the a next one-time upkeep code is missing, the functions of the electronic device are limited automatically (restricted operation mode). The lack of a next upkeep codes may basically have two reasons:
1) The device has been removed or disconnected from the intended technological environment of use; or
2) The intended technological environment of use has ceased to provide the one-time upkeep codes.

The first thing typically happens when the (authorized) user does not stick to his rules of behavior, e.g. by taking the electronic device out of his office without permission, or simply going offline unintentionally. It can also happen if an unauthorized third person (most likely a thief) takes the device away. In accordance with the invention, the first thing happens if the SIM card providing the upkeep codes is removed from the electronic device.

The second thing typically happens when the (authorized) user notices the loss of his electronic device and informs an operator who organizes the provision of the one-time upkeep codes that his electronic device is lost. Then the operator will stop providing the upkeep codes. It is also possible to send a signal to the electronic device to deactivate it in this case, in particular when the UTIs are rather long.

The processes, and in particular the safety measures, that are initiated at the electronic device when the absence of the next one-time upkeep signal has been registered, may vary according to the user's needs. These processes scheduled for an electronic device can be called the protection level of the electronic device. Note that the protection level also includes the procedures for getting back into the normal operation mode, such as reauthorization (if applicable).

Preferably, the protection level of an electronic device is variable. For example, the user may chose from several differently strict protection levels. The protection level is preferably scheduled by software. For example, the (authorized) user declares the desired protection level in a central database, which then transfers a corresponding software program to the electronic device. However, choosing the protection level will sometimes require hardware modifications, too. The protection level can, in particular, be adapted automatically and dynamically.

The safety measures may include completely freezing the electronic device, freeze some functions of the electronic device, delete some sensitive or all data stored, freeze or delete the authentication entity, or even destroy the device (e.g. by overloading semiconductor elements). Another safety measure may be that the electronic device sends a notice to a telecom operator or network server, so the hardware of the electronic device (e.g. identified by its international mobile equipment identity IMEI) can be registered as lost or stolen (e.g. in the equipment identity register EIR); this allows an integration in further security systems. Some safety measures may be taken immediately when the restricted operation mode is entered, some others may be taken later on when certain conditions are met.

By means of the invention, it is possible to make an electronic device completely useless for a finder or thief, both with respect to the device itself and the data stored on it. Data stored can be automatically deleted, and important functions can be automatically blocked. If necessary, the protection level can include that even a complete hardware reset (factory reset) will not make available the data stored on an electronic device, or only if a correct reauthorization code is entered.

Further, it is possible to couple the upkeep codes to an encryption. This makes wiretapping more difficult with telecommunication devices.

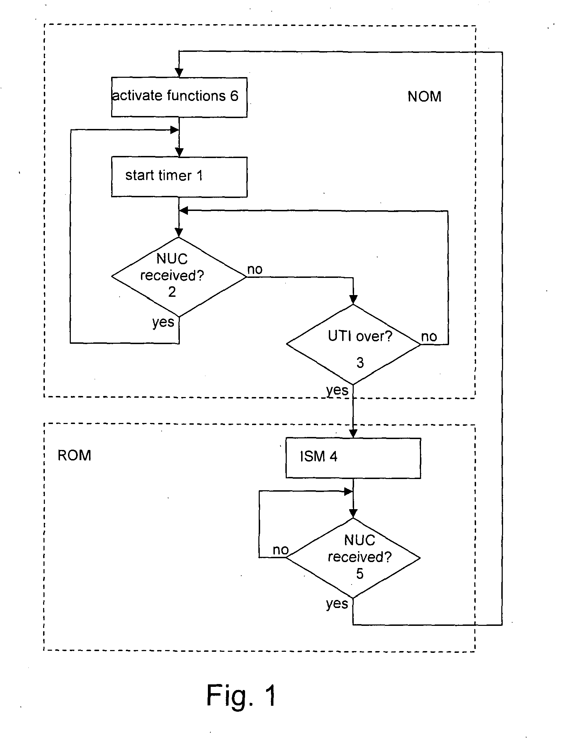

**Fig. 1** shows a schematic flow diagram, illustrating a simple variant of the inventive method for operating an electronic device.

It is assumed that after correct booting of the electronic device, it is in the normal operation mode NOM. As long as the electronic device is in the normal operation mode, all functions of the electronic device are accessible. Note that some of these functions may be additionally secured, for example by passwords, but the operation mode does not hinder their use.

When the electronic device has completed booting, a background process for protecting the electronic device starts: First, a timer (or counter) is started 1. Subsequently, it is checked whether a valid next one-time upkeep code NUC has been received at the electronic device 2 since the last timer reset.

If yes, the timer is started again 1 (including a reset of the timer to time zero), and it is again checked for a NUC 2.

If no, it is checked whether the time elapsed since the last start of the timer is larger than the UTI 3. If no, it is again checked for the NUC 2. If yes, the restricted operation mode ROM is entered. So in this case, no next valid one-time upkeep code has been detected during the time period of UTI since the receipt of the previous one-time upkeep code or since the booting of the electronic device, respectively. Note that in the variant shown, at the checking of a received NUC 2, incorrect upkeep codes received are ignored, i.e. treated as if no upkeep code would have arrived at all. Alternatively, in accordance with the invention, there can be a first check 2a whether any upkeep code has been received since the last timer reset 1. In case of no, the UTI is checked 3. If yes, there is a second check 2b whether the received upkeep code is a valid upkeep code. If yes, the timer is started again 1. If no, the ROM is initiated.

When entering the restricted operation mode ROM, immediate safety measures ISM are taken 4. The ISM reflect that in the ROM, only a part or none of the full functions of the electronic device are available. The ROM itself bars access to the concerned functions then. Note that ISM may include reversible safety measures (such as denying access to data) and irreversible measures (such as deleting data).

In the variant described in Fig. 1, the electronic device then checks whether a valid next one-time upkeep code has been received recently (i.e. after having entered the ROM or the last NUC check 5). If no, the electronic device keeps on checking 5. If yes, the normal operation mode NOM is resumed. Thus, in this example, the NOM is resumed automatically as soon as next one-time upkeep codes become available again.

Resuming the normal operation mode NOM includes reactivating (making available) of all functions 6 of the electronic device, i.e. the reversible part of the ISM are deactivated. Subsequently, the timer is started again 1.

Let us look at a practical example for the variant of Fig. 1 for general explanation: In this example, the electronic device is a PDA (personal digital assistant), with sets A and B of application data stored on it, and having a single data interface, such as a USB port. The user considers the data set A as highly confidential, and wants them not to leave his office. The user intends therefore not to take his PDA out of the office. Further, data set B is not confidential, but the user wants to prevent others from getting a complete copy. Further, the PDA should be unattractive for thieves who do not care for the data. The needs of the user may be satisfied with the present invention as follows:

The user provides one-time upkeep codes for the electronic device only within his office, for example by a radio transmitter with low power, which is blocked by the walls of his office. The PDA is equipped with a corresponding receiver. The ISM are set to delete the data set A (as an irreversible measure) and to disable the data interface (what is a reversible measure). The UTI is set to 1 minute.

When the PDA leaves the office (e.g. due to a theft), no more upkeep codes are received, and the ISM are triggered latest one minute later. Data set A is deleted immediately. Data set B cannot be copied to an external device, since the data interface is disabled. For the same reason, a thief cannot put his own data onto the PDA, what makes the PDA useless to him. In case the user has accidentally brought the PDA out of the office, he may simply go back to his office (what reactivates the data interface) and transfer a backup copy of data set A onto his PDA. Then the PDA works as usual again.

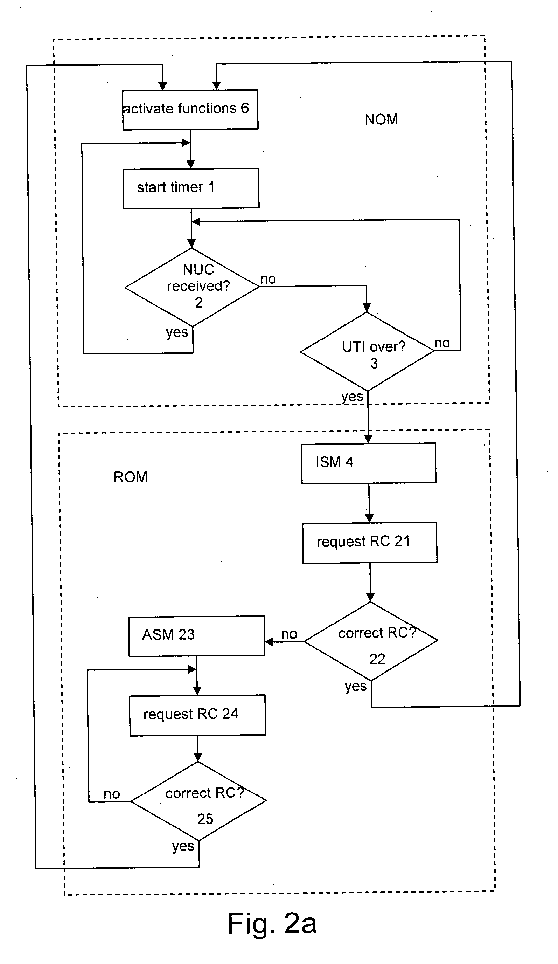

**Fig. 2a** shows a more complex variant of the inventive method for operating an electronic device including a reauthorization process. The normal operation mode NOM of the variant of Fig. 2a is similar to the variant of Fig. 1 and is therefore not explained again.

After the activation of the restricted operation mode ROM and taking the initial safety measures ISM 4, in this variant, the electronic device requests a reauthorization code RC from the user 21. Note that the request may be issued immediately after entering the ROM, or after a barred function has been requested by the user, for example. It is then checked whether the correct RC has been entered under predefined circumstances 22. These circumstances may include a limited number of trials, or a time limit for entering the correct RC, for example.

If the correct reauthorization code is entered, the NOM is reassumed, and all functions are reactivated 6. If the correct code is not entered, additional safety measures ASM are taken 23. The ASM often include irreversible safety measures. In the example of Fig. 2a, the user is then requested again to enter the RC 24. If the check for the correct RC 25 is positive, the normal operation mode NOM is reassumed. If not, the electronic device keeps on requesting the RC 24.

Note that in this variant, if the user enters the correct RC while not being provided with NUCs again, the normal operation mode NOM will only be available for one UTI. If the UTI is rather short (such as less than 10 seconds), reassuming the NOM makes no sense. If the UTI is rather long (such as more than 5 minutes), this may be a safety risk. These disadvantages may be avoided by allowing a reauthorization 21, 22 only if next one-time upkeep codes have become available again. For example, a request for the reauthorization code RC is issued only after having received a valid NUC during the ROM.

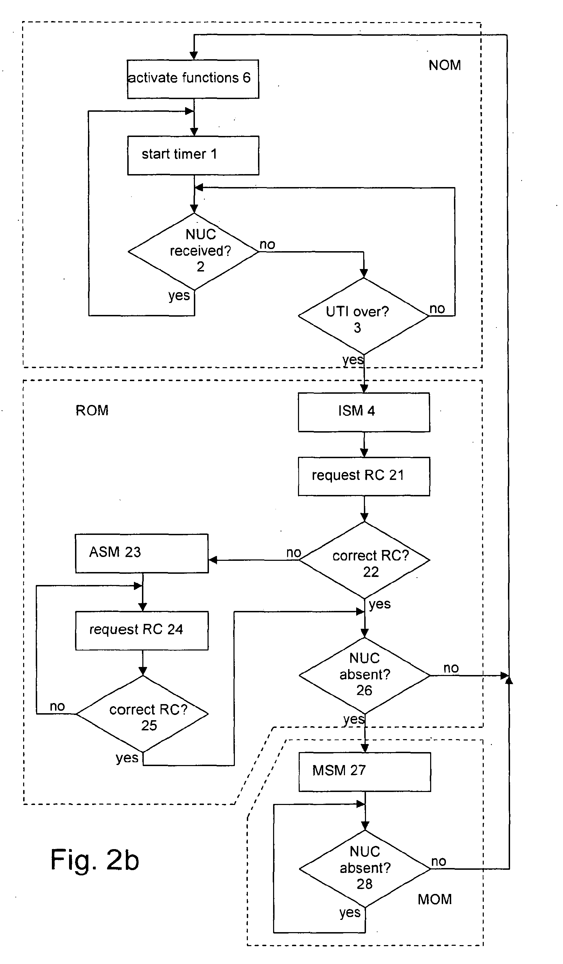

Another way to avoid the mentioned disadvantage can be the introduction of a modified operation mode MOM, as shown in **Fig. 2****b.** The variant of Fig. 2b is similar to the variant of Fig. 2a with respect to the NOM and the most of the ROM, and only the differences are explained in detail.

If during checking the RC 22 a correct RC has been noticed, it is checked whether valid NUCs are still lacking (absent) 26 since entering the ROM. In the most simple case, this is done by waiting for a period of UTI and see whether a valid NUC has arrived during said period. If NUCs are no more lacking, the normal operation mode NOM is resumed. If the NUCs are still lacking, a modified operation mode MOM is entered, and the current safety measures are modified to modified safety measures MSM 27. Typically, this modification will be a softening of the current safety measures (ISM and/or ASM). Then the electronic device keeps on checking whether valid next upkeep codes are still lacking 28. As soon as the NUCs are no more lacking, the normal operation mode is resumed.

Note that the MOM is also started when a correct RC has been noticed 25 after additional safety measures ASM have been taken 23, and NUCs are still lacking 26.

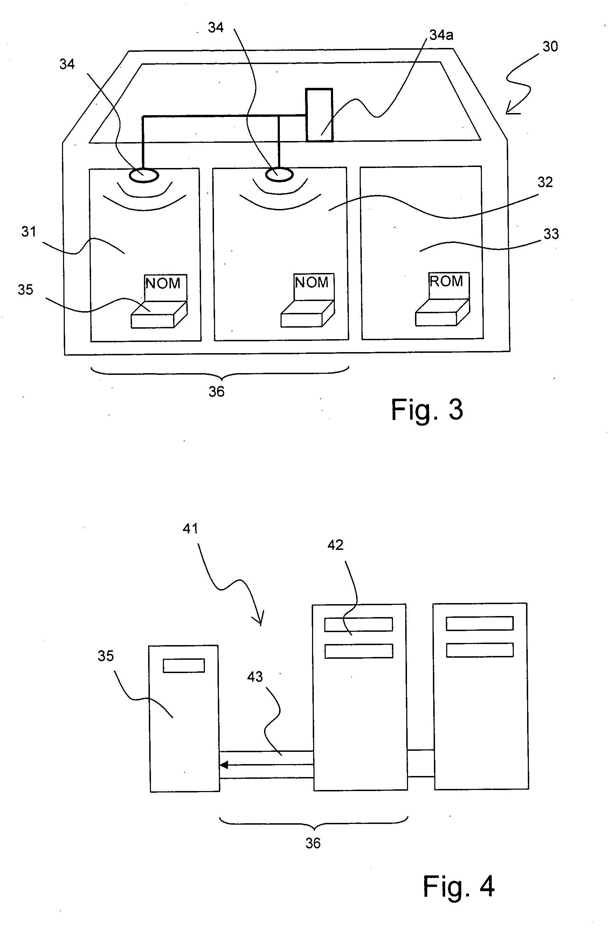

Fig. 3 illustrates the cooperation of an intended technological environment of use and an electronic device for general explanation, which is not within the scope of the claimed invention.

A building 30 of a company comprises a plurality of rooms 31-33. The company wishes that the electronic device 35 is operated within rooms 31 and 32 only. In all other locations, the electronic device 35 should be restricted in function.

The rooms 31, 32 are therefore equipped with transmitters 34 for providing one-time upkeep codes to the electronic device 35, here a laptop computer, within these rooms 31, 32. Outside the rooms 31, 32, the one-time upkeep codes cannot be received by the electronic device 35. The transmitters 34 are linked to a server 34a having stored a list of valid upkeep codes for transmission.

When the electronic device 35 is operated in room 31 or 32, the normal operation mode NOM is available. If the electronic device is taken outside the rooms 31, 32, for example into room 33 or outside the building 30, it switches into the restricted operation mode ROM.

The transmitters 34 and the linked server 34a, together with the operation range of the transmitters 34 (i.e. the interior of rooms 31, 32) constitute the intended technological environment of use 36 for the electronic device 35.

The example of Fig. 3 is realized with a local equipment, independent of commercial telecom operators or networks.

**Fig. 4** illustrates another intended technological environment of use 36 for an electronic device 35 for general explanation, which is not within the scope of the claimed invention. In this example, the electronic device 35 is a part of a stationary core network 41. The electronic device 35 can be a computer or router or any other core network equipment. It is linked via a cable 43 to a server 42, which is also part of the core network 41. The server 42 regularly sends one-time upkeep codes via the cable 43, which acts as a physical data connection, to the electronic device 35 in order to keep it in the normal operation mode NOM. If the electronic device 35 is stolen, it is disconnected from the server 42 (assuming that the thieves do not steal the server 42, too), most probably by disconnecting the cable 43 from the electronic device 35.

Here the server 42, together with the physical data connection via cable 43, constitute the intended technological environment of use 36 for the electronic device 35.

In the following, the booting and the communication between an electronic device and a server giving protection for the electronic device, e.g. as known from Fig. 4, shall be described in brief by way of example.

First, the electronic device sends its unique identifier, e.g. a TMSI (temporary mobile subscriber identity) derived from its IMSI (international mobile subscriber identity) to the server of a core network. Along with this, the electronic device discloses its upkeep time interval UTI. Moreover, the electronic device resets its UTI-counter.

The server is competent for a pool of unique identifiers only, and checks whether the received unique identifier is within the pool.

If yes, the server chooses an appropriate sender time interval STI, with STI < UTI. Further the server sends the next expected one-time upkeep code (or password) from a stored sequenced password list allocated to the unique identifier (if no passwords have been exchanged previously, the first password on the list is chosen).

Upon receipt of a password, the electronic device compares it with its internal sequenced password list.

If the electronic device receives the correct expected one-time password within UTI, then the UTI-counter is reset and the electronic device stays in the normal operation mode. Optionally, the electronic device sends a confirmation to the server.

If the electronic device receives an unexpected wrong password, or does not receive a password at all within UTI, the electronic device switches into restricted operation mode.

After STI has elapsed, the server sends the next one-time password from his list, and so on. Note that the server may provide a plurality of different electronic devices with passwords in parallel (However, then the passwords or upkeep codes preferably contain unique identifiers, so each electronic device can distinguish passwords intended for itself from passwords intended for other electronic devices).

When the electronic device is being switched off, the electronic device sends a log-out message to the server. Then the server stops sending further passwords. Both server and electronic device register the last password sent or received, in order to determine the next expected one-time password for the future (Alternatively, the next valid password can be determined by date and time).

Note that a TMSI can also be generated from unique hardware related identifiers (such as a processor serial number) for non-mobile units, such as a stationary desk top PC.

Optionally, the electronic device may be switched into a high availability operation mode that allows to permanently operate normally (without expiry of the UI-counter, i.e. without the need for upkeep codes). However, since this operation mode is very unsafe, the switching into the high availability operation mode preferably requires the electronic device to be in the normal operation mode at the time of switching, and/or a password authorization.

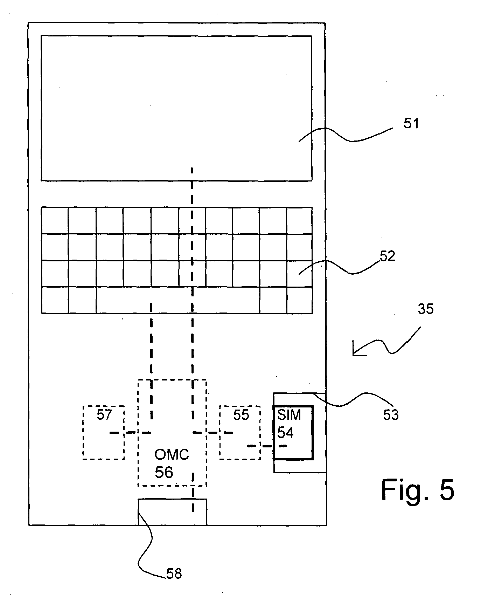

**Fig. 5** shows schematically an electronic device 35 in accordance with the present invention, namely a smartphone. The smartphone 35 comprises a display 51, a keyboard 52 and a SIM card slot 53 with a SIM card 54. In the normal operation mode NOM, the smartphone 35 allows all the usual smartphone functions, including making and receiving phone calls, sending and receiving email, use and manage an address book, use and manage an appointment calendar, and the like. The SIM card 54 is required to access a telecom network.

However, here the SIM card 54 is also an essential part of a safety system of the electronic device in accordance with the invention. The electronic device resp. smartphone 35 is operable with just one single specific SIM card 54, in order to make the smartphone 35 worthless for any thief. The SIM card 54 has also the function to provide one-time upkeep codes, by means of an included chip (not shown). As long as the SIM card 54 is within the SIM card slot 53 (and gets energy), it sends one-time upkeep codes to a receiver 55 of the electronic device 35. Further, there is an operation mode controller OMC 56 which checks whether a valid next one-time upkeep code NUC arrives within a time of UTI after the previous valid upkeep code has arrived. The OMC 56 can verify the validity of received one-time upkeep codes by comparing them with entries of a list of one-time upkeep codes stored in an archive 57.

If an expected NUC is registered is missing, what happens shortly after the SIM card 54 has been removed out of the slot 53, the OMC 56 switches the electronic device 35 into the restricted operation mode, and initial safety measures are started. Typically this will include denying the access to the calendar and the address book functions, and phone calls can only be made to emergency numbers (police, fire brigade, etc.). Note that putting in a new SIM card does not reenable the barred functions, since it does not provide the correct NUCs!

Further, the OMC 56 issues a request to enter a reauthorization code by displaying a corresponding text message at the display 51. Then the user may manually enter the correct reauthorization code via the keyboard 52 or insert a reauthorization key card (carrying the reauthorization code) into key card slot 58. If the correct reauthorization code is entered, the OMC 56 switches the electronic device 35 back into the normal operation mode.

Note that the OMC 56 and the archive 57 can be realized basically by software. Further, in the example shown, the SIM card 54 itself directly provides the upkeep codes. However, it is alternatively possible that the SIM card 54 receives encrypted signals form the telecom network and calculates the upkeep codes out of the encrypted signals.

## Claims

1. Method for operating an electronic device (35), in particular a mobile electronic device,
wherein the electronic device (35) has a normal operation mode (NOM) allowing full functions of the electronic device (35), and a restricted operation mode (ROM) allowing only a part or none of the full functions of the electronic device (35),
wherein in the normal operation mode (NOM), the electronic device (35) expects to receive a next one-time upkeep code (NUC) within a specified upkeep time interval UTI after having received a previous one-time upkeep code,
wherein in case an expected next one-time upkeep code (NUC) is missing or incorrect, the electronic device (35) switches into the restricted operation mode (ROM),
wherein for the electronic device (35), an intended technological environment of use (36) is defined,
wherein the intended technological environment (36) provides the one-time upkeep codes for keeping the electronic device (35) in the normal operation mode (NOM), and
wherein the electronic device (35) can receive the one-time upkeep codes of the intended technological environment (36) as long as it is operated within the intended technological environment (36), but cannot receive the one-time upkeep codes of the intended technological environment (36) when the electronic device (35) is operated outside of the intended technological environment (36),
**characterized in**
**that** the intended technological environment (36) includes a specific SIM (=subscriber identity module) card (54) within a SIM card slot (53) of the electronic device (35), the specific SIM card (54) within the SIM card slot (53) providing the upkeep codes, wherein the specific SIM card (54) is removable from the electronic device (35).

2. Method according to claim 1, **characterized in that** in the restricted operation mode (ROM), the access to part of or all of the data stored on the electronic device (35) is denied.

3. Method according to claim 1, **characterized in that** after the electronic device (35) has switched into the restricted operation mode (ROM) due to the detection the absence of a next one-time upkeep code (NUC), the normal operation mode (NOM) is resumed as soon as a valid one-time upkeep code is received at the electronic device (35).

4. Method according to claim 1, **characterized in that** after the electronic device (35) has switched into the restricted operation mode (ROM) due to the detection the absence of a next one-time upkeep code (NUC), the normal operation mode (NOM) is only resumed when a correct reauthorisation code (RC) is entered at the electronic device (35).

5. Method according to claim 4, **characterized in that** if the correct reauthorisation code (35) is not entered within specified circumstances after the absence of a next one-time upkeep code (NUC) has been detected at the electronic device (35), additional safety measures (ASM) are initiated at the electronic device (35).

6. Method according to claim 5, **characterized in that** the specified circumstances include
- that the correct reauthorisation code (RC) must be entered within a specified first time T1 after the absence of a next one-time upkeep code (NUC) has been detected at the electronic device (35),
- and/or that the correct reauthorisation code (RC) must be entered within a specified second time T2 after a request (21) for entering the reauthorisation code (RC) has been issued by the electronic device (35),
- and/or that the correct reauthorisation code (RC) must be entered within a specified third time T3 after a factory reset of the electronic device (35),
- and/or that the correct reauthorisation code (RC) must be entered within a limited number of trials, such as three trials.

7. Method according to claim 5, **characterized in that** the additional safety measures (ASM) include
- the deactivation of the electronic device (35),
- and/or the access to part of or all of the data stored on the electronic device (35) is denied;
- and/or the deletion of some or all of the data stored in the electronic device (35),
- and/or the destruction of the electronic device (35).

8. Method according to claim 1, **characterized in that** the correctness of a one-time upkeep code received at the electronic device (35) is verified by
- comparing the received upkeep code with an entry of a list of one-time upkeep codes stored at the electronic device (35),
- or comparing the received upkeep code with an upkeep code generated by an upkeep code generating function installed at the electronic device (35),
- or calculating a checking code from the received upkeep code by a checking function installed at the electronic device (35), and comparing the checking code with an entry of a list of checking codes stored at the electronic device (35).

9. Apparatus comprising an electronic device (35), in particular mobile electronic device,
wherein the electronic device (35) has a normal operation mode (NOM) allowing the full functions of the electronic device (35), and a restricted operation mode (ROM) allowing only a part or none of the full functions of the electronic device (35),
wherein the electronic device (35) comprises an operation mode controller OMC (56) for setting the operation mode of the electronic device (35),
wherein the electronic device (35) further comprises a receiver (55) for receiving one-time upkeep codes,
wherein the operation mode controller OMC (56) is designed to check, during normal operation mode (NOM), whether a next one-time upkeep code (NUC) is received within a specified upkeep time interval UTI after having received a previous one-time upkeep code,
and wherein the operation mode controller OMC (56) is designed to set the electronic device (35) into the restricted operation mode (ROM) in case an expected one-time upkeep code is missing or incorrect,
**characterized in that**
the apparatus further comprises a specific SIM card (54) which is removable from the electronic device (35), and which provides the upkeep codes.

10. Apparatus according to claim 9, **characterized in that** the operation mode controller OMC (56) is designed to resume the normal operation mode (NOM) as soon as a valid one-time upkeep code is received at the receiver (55).

11. Apparatus according to claim 9, **characterized in that** the electronic device (35) comprises an input, in particular a keyboard (52), and/or a data interface, in particular a key card slot (58), and that the operation mode controller OMC (56) is designed to resume the normal operation mode (NOM) only when a correct reauthorisation code (RC) is entered at the input or at the data interface.

12. Apparatus according to claim 11, **characterized in that** the electronic device (35) comprises an indicator, in particular a display (51), for signalling a request for reauthorization.

## Patentansprüche

1. Verfahren zum Betreiben eines elektronischen Geräts (35), insbesondere eines mobilen elektronischen Geräts,
wobei das elektronische Gerät (35) über einen normalen Betriebsmodus (NOM), welcher die vollständigen Funktionen des elektronischen Geräts (35) ermöglicht, und über einen eingeschränkten Betriebsmodus (ROM), welcher lediglich einen Teil oder keine der vollständigen Funktionen des elektronischen Geräts (35) ermöglicht, verfügt,
wobei das elektronische Gerät (35) im normalen Betriebsmodus (NOM) den Empfang eines nächsten Einmalaktualisierungscodes (NUC) mit einem vorgegeben Aktualisierungszeitintervall UTI im Anschluss an den Empfang eines vorherigen Einmalaktualisierungscodes erwartet,
wobei das elektronische Gerät (35) in den eingeschränkten Betriebsmodus (ROM) umschaltet, wenn ein erwarteter nächster Einmalaktualisierungscode (NUC) nicht vorhanden oder unzulässig ist,
wobei für das elektronische Gerät (35) eine vorgesehene technologische Gebrauchsumgebung (36) definiert wird,
wobei die vorgesehene technologische Umgebung (36) den Einmalaktualisierungscode bereitstellt, um das elektronische Gerät (35) im normalen Betriebsmodus (NOM) zu halten, und
wobei das elektronische Gerät (35) die Einmalaktualisierungscodes der vorgesehenen technologischen Umgebung (36) empfangen kann, solange es innerhalb der vorgesehenen technologischen Umgebung (36) betrieben wird, die Einmalaktualisierungscodes der vorgesehenen technologischen Umgebung (36) jedoch nicht empfangen kann, wenn das elektronische Gerät (35) außerhalb der vorgesehenen technologischen Umgebung (36) betrieben wird,
**dadurch gekennzeichnet, dass**
die vorgesehene technologische Umgebung (36) eine spezifische Teilnehmer-Identitätsmodul- bzw. SIM-Karte (54) in einem SIM-Kartensteckplatz (53) des elektronischen Geräts (35) umfasst, wobei die spezifische SIM-Karte (54) im SIM-Kartensteckplatz (53) Aktualisierungscodes bereitstellt, wobei die spezifische SIM-Karte (54) aus dem elektronischen Gerät (35) entfernt werden kann.

2. Verfahren nach Anspruch 1, **dadurch gekennzeichnet, dass** der Zugriff auf einen Teil der Daten oder auf alle Daten, welche auf dem elektronischen Gerät (35) gespeichert sind, im eingeschränkten Betriebsmodus (ROM) verweigert wird.

3. Verfahren nach Anspruch 1, **dadurch gekennzeichnet, dass**, nachdem das elektronische Gerät (35) aufgrund des Erkennens des Nichtvorhandenseins eines nächsten Einmalaktualisierungscodes (NUC) in den eingeschränkten Betriebsmodus (ROM) umgeschaltet hat, der normale Betriebsmodus (NOM) wieder aufgenommen wird, sobald ein gültiger Einmalaktualisierungscode an dem elektronischen Gerät (35) empfangen wird.

4. Verfahren nach Anspruch 1, **dadurch gekennzeichnet, dass**, nachdem das elektronische Gerät (35) aufgrund des Erkennens des Nichtvorhandenseins eines nächsten Einmalaktualisierungscodes (NUC) in den eingeschränkten Betriebsmodus (ROM) umgeschaltet hat, der normale Betriebsmodus (NOM) nur dann wieder aufgenommen wird, wenn ein korrekter Neuautorisierungscode (RC) an dem elektronischen Gerät (35) eingegeben wird.

5. Verfahren nach Anspruch 4, **dadurch gekennzeichnet, dass**, wenn der korrekte Neuautorisierungscode (RC) nicht unter festgelegten Umständen nach dem Erkennen, an der elektrischen Vorrichtung (35), des Nichtvorhandenseins eines nächsten Einmalaktualisierungscodes (NUC) eingegeben wird, zusätzliche Schutzmaßnahmen (ASM) an dem elektronischen Gerät (35) eingeleitet werden.

6. Verfahren nach Anspruch 5, **dadurch gekennzeichnet, dass** die festgelegten Umstände einbeziehen,
- dass der korrekte Neuautorisierungscode (RC) innerhalb einer spezifizierten ersten Zeitspanne T1 nach Erkennen, an dem elektronischen Gerät (35), des Nichtvorhandenseins eines nächsten Einmalaktualisierungscodes (NUC) eingegeben werden muss,
- und/oder dass der korrekte Neuautorisierungscode (RC) innerhalb einer spezifizierten zweiten Zeitspanne T2, nachdem eine Aufforderung (21) zur Eingabe des Neuautorisierungscodes (RC) von dem elektronischen Gerät (35) ausgegeben wurde, eingegeben werden muss,
- und/oder dass der korrekte Neuautorisierungscode (RC) innerhalb einer spezifizierten dritten Zeitspanne T3 nach einer werkseitigen Neueinstellung des elektronischen Geräts (35) eingegeben werden muss,
- und/oder dass der korrekte Neuautorisierungscode (RC) innerhalb einer begrenzten Anzahl von Versuchen, beispielsweise drei Versuche, eingegeben werden muss.

7. Verfahren nach Anspruch 5, **dadurch gekennzeichnet, dass** die zusätzlichen Sicherheitsmaßnahmen (ASM) umfassen:
- Deaktivieren des elektronischen Geräts (35),
- und/oder Verweigern des Zugriffs auf einen Teil oder auf alle der auf dem elektronischen Gerät (35) gespeicherten Daten;
- und/oder Löschen einiger oder aller der auf dem elektronischen Gerät (35) gespeicherten Daten,
- und/oder Zerstören des elektronischen Geräts (35).

8. Verfahren nach Anspruch 1, **dadurch gekennzeichnet, dass** die Zulässigkeit eines an dem elektronischen Gerät (35) empfangenen nächsten Einmalaktualisierungscodes geprüft wird durch:
- Vergleichen des empfangenen Aktualisierungscodes mit einem Eintrag in einer an dem elektronischen Gerät (35) gespeicherten Liste von Einmalaktualisierungscodes,
- oder Vergleichen des empfangenen Aktualisierungscodes mit einem durch eine an dem elektronischen Gerät (35) installierte Aktualisierungscodeerzeugungsfunktion erzeugten Aktualisierungscode,
- oder Berechnen eines Überprüfungscodes aus dem empfangenen Aktualisierungscode durch eine an dem elektronischen Gerät (35) installierte Überprüfungsfunktion, und Vergleichen des Überprüfungscodes mit einem Eintrag in einer an dem elektronischen Gerät (35) gespeicherten Liste von Überprüfungscodes.

9. Vorrichtung, umfassend ein elektronisches Gerät (35), insbesondere ein mobiles elektronisches Gerät,
wobei das elektronische Gerät (35) über einen normalen Betriebsmodus (NOM), welcher die vollständigen Funktionen des elektronischen Geräts (35) ermöglicht, und über einen eingeschränkten Betriebsmodus (ROM), welcher lediglich einen Teil oder keine der vollen Funktionen des elektronischen Geräts (35) ermöglicht, verfügt, wobei das elektronische Gerät (35) einen Betriebsmodus-Controller OMC (56) für das Einstellen des Betriebsmodus des elektronischen Geräts (35) umfasst,
wobei das elektronische Gerät (35) weiterhin einen Empfänger (55) für den Empfang von Einmalaktualisierungscodes umfasst,
wobei der Betriebsmodus-Controller OMC (56) dazu ausgelegt ist, während des normalen Betriebsmodus (NOM) zu prüfen, ob ein nächster Einmalaktualisierungscode (NUC) innerhalb eines vorgegeben Aktualisierungszeitintervalls UTI nach dem Empfang eines vorherigen Einmalaktualisierungscodes empfangen wird,
und wobei der Betriebsmodus-Controller OMC (56) dazu ausgelegt ist, das elektronische Gerät (35) in den eingeschränkten Betriebsmodus (ROM) zu schalten, wenn ein erwarteter Einmalaktualisierungscode fehlt oder unzulässig ist,
**dadurch gekennzeichnet, dass**
die Vorrichtung weiterhin eine spezifische SIM-Karte (54) umfasst, welche aus dem elektronischen Gerät (35) entfernt werden kann, und welche die Aktualisierungscodes bereitstellt.

10. Vorrichtung nach Anspruch 9, **dadurch gekennzeichnet, dass** der Betriebsmodus-Controller OMC (56) dazu ausgelegt ist, den normalen Betriebsmodus (NOM) wieder aufzunehmen, sobald ein gültiger Einmalaktualisierungscode an dem Empfänger (55) empfangen wird.

11. Vorrichtung nach Anspruch 9, **dadurch gekennzeichnet,**
**dass** das elektronische Gerät (35) einen Eingang, insbesondere eine Tastatur (52), und/oder eine Datenschnittstelle, insbesondere einen Schlüsselkartensteckplatz (58), umfasst, und dass der Betriebsmodus-Controller OMC (56) dazu ausgelegt ist, den normalen Betriebsmodus (NOM) nur dann wieder aufzunehmen, wenn ein korrekter Neuautorisierungscode (RC) am Eingang oder an der Datenschnittstelle eingegeben wird.

12. Vorrichtung nach Anspruch 11, **dadurch gekennzeichnet, dass** das elektronische Gerät (35) einen Indikator, insbesondere ein Display (51), umfasst, um eine Neuautorisierungsanforderung zu signalisieren.

## Revendications

1. Procédé de fonctionnement d'un dispositif électronique (35), en particulier un dispositif électronique mobile,
dans lequel le dispositif électronique (35) présente un mode de fonctionnement normal (NOM) autorisant les fonctions complètes du dispositif électronique (35), et un mode de fonctionnement limité (ROM) autorisant seulement une partie, ou n'autorisant aucune, des fonctions complètes du dispositif électronique (35),
dans lequel en mode de fonctionnement normal (NOM), le dispositif électronique (35) prévoit de recevoir un code de maintenance à usage unique suivant (NUC) dans un intervalle de temps de maintenance UTI spécifié après avoir reçu un code de maintenance à usage unique précédent,
dans lequel, au cas où un code de maintenance à usage unique suivant (NUC) prévu serait manquant ou incorrect, le dispositif électronique (35) passe en mode de fonctionnement limité (ROM),
dans lequel pour le dispositif électronique (35), un environnement technologique d'utilisation prévu (36) est défini,
dans lequel l'environnement technologique prévu (36) fournit les codes de maintenance à usage unique pour maintenir le dispositif électronique (35) en mode de fonctionnement normal (NOM), et
dans lequel le dispositif électronique (35) peut recevoir les codes de maintenance à usage unique de l'environnement technologique prévu (36) tant qu'il fonctionne dans l'environnement technologique prévu (36), mais ne peut pas recevoir les codes de maintenance à usage unique de l'environnement technologique prévu (36) lorsque le dispositif électronique (35) fonctionne en dehors de l'environnement technologique prévu (36),
**caractérisé en ce que**
l'environnement technologique prévu (36) comprend une carte SIM (= module d'identité d'abonné) spécifique (54) dans une fente pour carte SIM (53) du dispositif électronique (35), la carte SIM spécifique (54) dans la fente pour carte SIM (53) fournissant les codes de maintenance, la carte SIM spécifique (54) pouvant être retirée du dispositif électronique (35).

2. Procédé selon la revendication 1, **caractérisé en ce qu'**en mode de fonctionnement limité (ROM), l'accès à tout ou partie des données stockées dans le dispositif électronique (35) est refusé.

3. Procédé selon la revendication 1, **caractérisé en ce que**, après que le dispositif électronique (35) est passé en mode de fonctionnement limité (ROM) en raison de la détection de l'absence d'un code de maintenance à usage unique suivant (NUC), le mode de fonctionnement normal (NOM) reprend dès qu'un code de maintenance à usage unique valide est reçu au niveau du dispositif électronique (35).

4. Procédé selon la revendication 1, **caractérisé en ce que**, après que le dispositif électronique (35) est passé en mode de fonctionnement limité (ROM) en raison de la détection de l'absence d'un code de maintenance à usage unique suivant (NUC), le mode de fonctionnement normal (NOM) ne reprend que lorsqu'un code de ré-autorisation correct (RC) est entré au niveau du dispositif électronique (35).

5. Procédé selon la revendication 4, **caractérisé en ce que** si le code de ré-autorisation correct (35) n'est pas entré dans des circonstances spécifiées après que l'absence d'un code de maintenance à usage unique suivant (NUC) a été détectée au niveau du dispositif électronique (35), des mesures de sécurité supplémentaires (ASM) sont initiées au niveau du dispositif électronique (35).

6. Procédé selon la revendication 5, **caractérisé en ce que** les circonstances spécifiées sont les suivantes
- le code de ré-autorisation correct (RC) doit être entré au cours d'une première période spécifiée T1 après que l'absence d'un code de maintenance à usage unique suivant (NUC) a été détectée au niveau du dispositif électronique (35),
- et/ou le code de ré-autorisation correct (RC) doit être entré au cours d'une deuxième période spécifiée T2 après qu'une demande (21) d'entrée du code de ré-autorisation (RC) a été délivrée par le dispositif électronique (35),
- et/ou le code de ré-autorisation correct (RC) doit être entré au cours d'une troisième période spécifiée T3 après une réinitialisation d'usine du dispositif électronique (35),
- et/ou le code de ré-autorisation correct (RC) doit être entré dans un nombre limité d'essais, tel que trois essais.

7. Procédé selon la revendication 5, **caractérisé en ce que** les mesures de sécurité supplémentaires (ASM) comprennent
- la désactivation du dispositif électronique (35),
- et/ou l'accès à tout ou partie des données stockées dans le dispositif électronique (35) est refusé ;
- et/ou la suppression de tout ou partie des données stockées dans le dispositif électronique (35),
- et/ou la destruction du dispositif électronique (35).

8. Procédé selon la revendication 1, **caractérisé en ce que** l'exactitude d'un code de maintenance à usage unique suivant reçu au niveau du dispositif électronique (35) est vérifiée
- en comparant le code de maintenance reçu avec une entrée d'une liste de codes de maintenance à usage unique stockés au niveau du dispositif électronique (35),
- ou en comparant le code de maintenance reçu avec un code de maintenance généré par une fonction de génération d'un code de maintenance installée au niveau du dispositif électronique (35),
- ou en calculant un code de vérification à partir du code de maintenance reçu par une fonction de vérification installée au niveau du dispositif électronique (35), et en comparant le code de vérification avec une entrée d'une liste de codes de vérification stockés au niveau du dispositif électronique (35).

9. Appareil comprenant un dispositif électronique (35), en particulier un dispositif électronique mobile,
dans lequel le dispositif électronique (35) présente un mode de fonctionnement normal (NOM) autorisant les fonctions complètes du dispositif électronique (35), et un mode de fonctionnement limité (ROM) autorisant seulement une partie ou n'autorisant aucune des fonctions complètes du dispositif électronique (35),
dans lequel le dispositif électronique (35) comprend un contrôleur de mode de fonctionnement OMC (56) pour définir le mode de fonctionnement du dispositif électronique (35),
dans lequel le dispositif électronique (35) comprend en outre un récepteur (55) pour recevoir des codes de maintenance à usage unique,
dans lequel le contrôleur de mode de fonctionnement OMC (56) est conçu pour vérifier, durant le mode de fonctionnement normal (NOM), si un code de maintenance à usage unique suivant (NUC) est reçu dans un intervalle de temps de maintenance UTI spécifié après avoir reçu un code de maintenance à usage unique précédent,
et dans lequel le contrôleur de mode de fonctionnement OMC (56) est conçu pour faire passer le dispositif électronique (35) en mode de fonctionnement limité (ROM) au cas où un code de maintenance à usage unique prévu serait manquant ou incorrect,
**caractérisé en ce que**
l'appareil comprend en outre une carte SIM spécifique (54) qui peut être retirée du dispositif électronique (35), et qui fournit les codes de maintenance.

10. Appareil selon la revendication 9, **caractérisé en ce que** le contrôleur de mode de fonctionnement OMC (56) est conçu pour réactiver le mode de fonctionnement normal (NOM) dès qu'un code de maintenance à usage unique valide est reçu au niveau du récepteur (55).

11. Appareil selon la revendication 9, **caractérisé en ce que**
le dispositif électronique (35) comprend une entrée, en particulier un clavier (52), et/ou une interface de données, en particulier une fente pour carte-clé (58), et **en ce que** le contrôleur de mode de fonctionnement OMC (56) est conçu pour réactiver le mode de fonctionnement normal (NOM) seulement lorsqu'un code de ré-autorisation correct (RC) est entré au niveau de l'entrée ou au niveau de l'interface de données.

12. Appareil selon la revendication 11, **caractérisé en ce que** le dispositif électronique (35) comprend un indicateur, en particulier un dispositif d'affichage (51), pour signaler une demande de ré-autorisation.
